# EUROPÄISCHE PATENTANMELDUNG

(11) **EP 2 395 329 A2**
(43) Veröffentlichungstag der Anmeldung: **14.12.2011**
(21) Anmeldenummer: 11002965.9
(22) Anmeldetag: 08.04.2011
(51) Int. Cl.: G01F 1/684

(54) **Sensoranordnung für ein kalorimetrisches Massedurchflussmessgerät**

(30) Priorität: 20.04.2010 DE 102010015813
(71) Anmelder: KROHNE Messtechnik GmbH, 47058 Duisburg (DE)
(72) Erfinder: Glatzel, Michael, 42369 Wuppertal (DE); Kube, Jörg, 45772 Marl (DE); Rhode, Marc, 21077 Hamburg (DE); Seidel, Andreas, 47259 Duisburg (DE)
(74) Vertreter: Gesthuysen, von Rohr & Eggert

(57) **Zusammenfassung**

Beschrieben und dargestellt ist eine Sensoranordnung (1) für ein kalorimetrisches Massedurchflussmessgerät, zur Messung des Massedurchflusses in einem Messrohr (2), umfassend mindestens eine Sonde (3), wobei die Sonde (3) im Strömungsquerschnitt (4) des Messrohrs (2) positionierbar ist.

Eine Sensoranordnung für ein kalorimetrisches Massedurchflussmessgerät, die zum einen eine gesteigerte Messgenauigkeit gewährleistet und zum anderen eine gesteigerte Flexibilität im Betrieb aufweist, wird realisiert, indem ein Halter (5) vorgesehen ist, wobei die Sonde (3) derart in dem Halter (5) befestigt ist, dass die Sonde (3) im Einbauzustand im Messrohr (2) im Wesentlichen berührungsfrei mit einem radialen Abstand durch mindestens eine Sondenausnehmung (6) in der Wand (7) des Messrohrs (2) in den Strömungsquerschnitt (3) des Messrohrs (2) geführt ist und wobei der Halter (5) derart ausgestaltet ist, dass die Sonde (3) von dem Messrohr (2) thermisch entkoppelt ist.

## Beschreibung

Die Erfindung betrifft eine Sensoranordnung für ein kalorimetrisches Massedurchflussmessgerät, zur Messung des Massedurchflusses in einem Messrohr, umfassend mindestens eine Sonde, wobei die Sonde im Strömungsquerschnitt des Messrohrs positionierbar ist.

Anordnungen zur kalorimetrischen Durchflussmessung sind in einer Vielzahl von Ausgestaltungen im Stand der Technik bekannt. Kalorimetrische Durchflussmesser dienen zur Bestimmung des Durchflusses von Fluiden, z.B. Flüssigkeiten oder Gase, in Rohrleitungen und eignen sich vorteilhaft zur Messung bei kleineren Strömungsgeschwindigkeiten. Die kalorimetrische Durchflussmessung eignet sich bevorzugt zur Bestimmung des Massedurchflusses, da dieser unmittelbar proportional zu dem Messsignal ist. Eine für die Bestimmung des Massendurchflusses wesentliche Messgröße ist der Wärmestrom Q, der von einem geheizten Sensor an das strömende Fluid abgegeben und von dem Fluid abtransportiert wird. Dieser abtransportierte Wärmestrom entspricht der aufgewendeten elektrischen Heizleistung, die dann beispielsweise als Messgröße herangezogen wird. In der Praxis werden üblicherweise zwei Messmethoden unterschieden.

Eine erste Methode ist die sogenannte Abkühlmethode, bei der das strömende Fluid die in den Strömungsquerschnitt des Messrohrs eingeführte geheizte Sonde abkühlt, wobei die Temperaturdifferenz zwischen der Temperatur des Fluids und der Sondentemperatur konstant gehalten wird. Bei der Abkühlmethode ist die für die konstante Temperaturdifferenz erforderliche Heizleistung das Maß zur Bestimmung des Massedurchflusses.

Eine zweite Methode ist die sogenannte Aufwärmmethode, bei der der von der geheizten Sonde abgeführte Wärmestrom die Temperatur des Fluids an einer zweiten, stromabwärts positionierten Sonde erhöht, wobei die Temperaturerhöhung ΔT bei konstanter Heizleistung ein Maß zur Bestimmung des Massedurchflusses ist. Auch bei der zweiten Methode kann alternativ die Temperaturerhöhung ΔT durch Nachregeln der Heizleistung konstant gehalten werden, so dass dann die erforderliche Heizleistung als Messgröße für den Massestrom herangezogen werden kann.

Ein weiteres Unterscheidungsmerkmal für aus dem Stand der Technik bekannte kalorimetrische Massedurchflussmessgeräte ist die Positionierung der Sonde bzw. die Positionierung der Sonden. Je nach Messmethode sind beispielsweise zwei Sonden nebeneinander, orthogonal zur Strömungsrichtung angeordnet, wobei eine der beiden Sonden geheizt ist und die andere eine Referenztemperatur misst. Eine zweite Möglichkeit, die insbesondere für die Aufwärmmethode angewandt wird, beinhaltet, dass eine Sonde stromaufwärts und eine Sonde etwas weiter stromabwärts positioniert wird, wobei insbesondere die stromaufwärts positionierte Sonde geheizt wird und die stromabwärts positionierte Sonde die Temperaturerhöhung des strömenden Fluids misst. Alternativ dazu kann die Anordnung der geheizten und ungeheizten Sonde im Bezug auf die Strömungsrichtung auch umgekehrt sein, wobei dann die stromaufwärts angeordnete Sonde die Referenztemperatur misst und die stromabwärts positionierte Sonde eine Heizleistung an das strömende Medium abgibt.

Im Stand der Technik ist bekannt, dass die Befestigung der Sonden am Messrohr durch Gewindestutzen erfolgt, in die die Sonden einschraubbar sind und so im Strömungsquerschnitt positioniert werden. Das Einschrauben der Sonden in die üblicherweise stoffschlüssig mit dem Messrohr verbundenen Stutzen bietet den Vorteil, dass die Sonden beispielweise zu Wartungszwecken einfach entfernt werden können. Nachteilig ist allerdings, dass die Sonden und der Stutzen unmittelbar aufeinander abgestimmt sein müssen, wodurch die Flexibilität im Betrieb, beispielweise beim Auswechseln einer Sonde, eingeschränkt ist. Die aus dem Stand der Technik bekannten Sensoranordnungen weisen ferner den Nachteil auf, dass durch Wärmeübergang zwischen den Sonden und dem Messrohr eine Beeinflussung des abgegebenen Wärmestroms bzw. der gemessenen Temperatur erfolgt, wodurch die Messergebnisse verfälscht werden und die Qualität der Messergebnisse reduziert wird.

Ausgehend von den aus dem Stand der Technik bekannten Problemen, liegt der vorliegenden Erfindung die Aufgabe zugrunde, eine Sensoranordnung für ein kalorimetrisches Massedurchflussmessgerät anzugeben, die zum einen gesteigerte Messgenauigkeit gewährleistet und zum anderen eine gesteigerte Flexibilität im Betrieb aufweist.

Die vorgenannte Aufgabe ist bei einer gattungsgemäßen Sensoranordnung dadurch gelöst, dass ein Halter vorgesehen ist, wobei die Sonde derart in dem Halter befestigt ist, dass die Sonde im Einbauzustand im Messrohr im Wesentlichen berührungsfrei mit einem radialen Abstand durch mindestens eine Sondenausnehmung in der Wand des Messrohrs in den Strömungsquerschnitt des Messrohrs geführt ist und wobei der Halter derart ausgestaltet ist, dass die Sonde von dem Messrohr thermisch entkoppelt ist.

Die erfindungsgemäße Sensoranordnung weist den Vorteil auf, dass kein oder nur ein sehr geringer Wärmefluss von der Sonde auf die Wand des Messrohrs bzw. von der Wand des Messrohrs auf die Sonde erfolgen kann, da die Sonde von der Wand des Messrohres thermisch entkoppelt ist. Die Sonde ist auf der Außenseite des Messrohrs in dem Halter befestigt und ist durch eine Sondenausnehmung in der Wand des Messrohres in den Strömungsquerschnitt des Messrohrs hineingeführt. Die Sonde ist dabei derart in der Sondenausnehmung positioniert, dass sie die Wand des Messrohrs nicht berührt und keinerlei direkten Kontakt hat, wobei der radiale Abstand zwischen der Sonde und der Wand des Messrohrs sehr gering sein kann. Die Sonde ist vorzugsweise durch den Halter in ihrer Längsrichtung so angeordnet, dass ihre Spitze exakt in der Mittelachse des Strömungsquerschnitts des Messrohrs positioniert ist, wodurch sich ein optimales Messergebnis erzielen lässt.

Durch unterschiedlich ausgestaltete Halter, also beispielsweise durch Halter mit unterschiedlicher Dicke oder geometrischer Ausgestaltung, lässt sich die Positionierung der Sonde beeinflussen bzw. an unterschiedliche Betriebsbedingungen anpassen. So können beispielsweise Sonden mit unterschiedlicher Länge bei einem Messrohr mit konstantem Durchmesser verwendet werden, indem eine Positionierung über die Geometrie des Halters erfolgt. In Abhängigkeit vom Durchmesser der Sondenausnehmung lassen sich mit entsprechenden Haltern auch Sonden mit variierenden Durchmessern an dem Messrohr befestigen. Die Sonde ist ausschließlich in dem Halter befestigt, der eine thermische Entkopplung der Sonde gewährleistet, folglich einen Wärmefluss zwischen Sonde und der Wand des Messrohrs unterbindet bzw. minimiert. Um ein Austreten des in dem Strömungsquerschnitt fließenden Mediums durch die Sondenausnehmung, insbesondere durch den Ringspalt, zu unterbinden, ist zwischen dem Halter und der Wand des Messrohrs vorzugsweise wenigstens eine Dichtung angeordnet.

Um eine Messung der Referenztemperatur bei gleichen Randbedingungen zu gewährleisten, ist gemäß einer ersten Ausgestaltung vorgesehen, dass mindestens zwei Sonden in dem Halter befestigt sind, wobei eine erste Sonde zumindest in einem Kopfbereich aufheizbar ist und eine zweite Sonde zur Messung einer Temperatur geeignet ist. Die beiden Sonden sind dabei in Abhängigkeit der gewählten Auswertemethode entweder nebeneinander oder hintereinander im Strömungskanal angeordnet, wobei die aufheizbare Sonde wiederum in Abhängigkeit von der Messmethode entweder stromabwärts oder stromaufwärts zur messenden Sonde angeordnet ist.

Für jede Sonde ist im Messrohr eine separate Sondenausnehmung vorgesehen, durch die die jeweilige Sonde in den Strömungsquerschnitt des Messrohrs hineingeführt ist, ohne dass die Sonde die Wand der Sondenausnehmung bzw. des Messrohrs dabei berührt. Beide Sonden sind in einem einzigen gemeinsamen Halter befestigt, so dass durch den Halter bzw. auch durch die Sondenausnehmungen die Relativposition der beiden Sonden im Strömungskanal festgelegt ist. Der Halter entkoppelt die beiden Sonden thermisch untereinander und entkoppelt auch die beiden Sonden thermisch von dem Messrohr.

Eine erste der beiden Sonden ist zumindest in einem Kopfbereich aufheizbar, so dass die Sonde im Kopfbereich einen Wärmestrom an das sie umströmende Fluid abgibt. Je nach Anwendungsfall ist allerdings auch vorgesehen, dass die Sonde nicht nur lediglich in ihrem Kopfbereich aufheizbar ist, sondern in einem größeren Teilbereich oder sogar über die gesamte Länge aufheizbar ist.

Die zweite der beiden Sonden dient zur Messung einer Referenztemperatur, beispielsweise der Fluidtemperatur, und ist beispielsweise mit einem Temperaturmesswiderstand oder einem Thermoelement ausgestattet.

Üblicherweise haben die erste und die zweite Sonde jeweils die gleiche Länge, so dass sie eine gleiche Eindringtiefe in den Strömungsquerschnitt, vorzugsweise bis unmittelbar auf die Ebene der Mittelachse des Strömungsquerschnitts aufweisen. Die Wärmeleiteigenschaften der Sonden sind beispielsweise über ihre gesamte Länge im Wesentlichen homogen, wobei alternativ auch unterschiedliche Wärmeleiteigenschaften über die Längserstreckung der Sonden vorgesehen sind.

Zur dauerhaften Positionierung des Halters an dem Messrohr hat sich als vorteilhaft herausgestellt, wenn gemäß einer weiteren Ausgestaltung der Halter an der Außenfläche des Messrohrs befestigbar ist, insbesondere das Messrohr in einem Befestigungsbereich zur Befestigung des Halters eine Abflachung aufweist. Der Halter wird dazu beispielsweise mit Schrauben an der Wand des Messrohrs festgeschraubt, so dass eine stabile und zuverlässige Befestigung des Halters und eine sichere Positionierung der Sonden gewährleistet ist. Alternativ ist auch vorgesehen, dass der Halter selbst nicht unmittelbar an dem Messrohr befestigt ist, sondern durch ein Befestigungselement, das seinerseits an dem Messrohr befestigt ist, kraft- oder formschlüssig gehalten ist.

Da eine Befestigung des Halters auf der gewölbten Oberfläche des Messrohrs aufwendig ist, ist bevorzugt, wenn das Messrohr in einem Befestigungsbereich zur Befestigung des Halters abgeflacht ist, so dass eine ebene Fläche zur Befestigung des Halters zur Verfügung steht. Von dieser Befestigungsfläche erstreckt sich die Sondenausnehmung durch die Wand des Messrohrs in den Strömungsquerschnitt hinein, wobei die Sondenausnehmung vorzugsweise orthogonal zur ebenen Fläche des Befestigungsbereichs ausgerichtet ist. Durch den Befestigungsbereich wird die Wandstärke des Messrohrs partiell reduziert, wobei darauf zu achten ist, dass eine ausreichende Wandstärke für einen sicheren Betrieb des Massedurchflussmessgeräts verbleibt.

Der Halter liegt vorzugsweise im Wesentlichen flächig auf der Befestigungsfläche auf und ist derart mit dem Messrohr in Kontakt, dass durch die Sondenausnehmung kein Fluid aus dem Messrohr nach außen treten kann. Als vorteilhaft hat sich dabei eine dichtende Verbindung herausgestellt.

Um die Positionierung der Sonde in der Sondenausnehmung zu vereinfachen, ist gemäß einer Weiterbildung vorgesehen, dass im Einbauzustand zumindest ein Teil des Halters teilweise in die Wand des Messrohrs hineinragt. Der Halter weist dazu eine Ausformung, z.B. eine zylindrische Ausformung, auf, die in eine korrespondierende Ausnehmung in der Wand des Messrohrs hineinragt. Vorzugsweise verläuft zentral in der Ausnehmung auch eine Durchgangsbohrung in dem Halter für die Sonde, wobei die Ausnehmung in der Wand des Messrohrs sich dabei vorzugsweise als Sondenausnehmung fortsetzt, so dass die Sonde im Bereich der Ausformung im Halter gehalten ist und durch die exakte Positionierung der Ausformung in der korrespondierenden Ausnehmung in der Wand des Messrohrs eine exakte Positionierung der Sonde innerhalb der Sondenausnehmung sichergestellt ist.

Gemäß einer weiteren vorteilhaften Ausgestaltung der Sensoranordnung ist vorgesehen, dass der Halter mehrteilig ausgestaltet ist, nämlich eine Basisplatte und eine der Anzahl der Sonden entsprechende Anzahl an Buchsen umfasst, insbesondere wobei die Buchsen zumindest teilweise formschlüssig in korrespondierende Buchsenausnehmungen in der Basisplatte einbringbar sind. Die Sonden sind dabei in den Buchsen befestigt, so dass die Buchsen mit den darin befestigten Sonden an der Basisplatte befestigbar sind. Vorzugsweise sind die Buchsen rotationssymmetrisch ausgestaltet, so dass sie in eine einfache kreisrunde Buchsenausnehmung in der Basisplatte einsteckbar sind. Vorzugsweise ist auch vorgesehen, dass die Außenkontur der Basisplatte rotationssymmetrisch ausgestaltet ist. Die Buchsen dienen folglich der Befestigung und Halterung der Sonde, wobei durch einen Austausch der Buchsen verschiedene Sonden mit unterschiedlichen Durchmessern in einer Basisplatte einsetzbar sind, wodurch die Sensoranordnung sehr variabel ist.

Um die Befestigung der Sonden noch zuverlässiger auszugestalten, insbesondere um durch die Strömung entstehende Vibrationen zu dämpfen, ist gemäß einer weiteren Ausgestaltung vorgesehen, dass die Buchsen zumindest teilweise in korrespondierende Ausnehmungen sowohl in der Basisplatte als auch in der Wand des Messrohrs einbringbar sind, so dass die Buchsen ein Verbindungsglied zwischen Basisplatte und der Wand des Messrohrs darstellen. Die Buchsen weisen dazu eine Durchgangsbohrung auf, die dem Außendurchmesser der verwendeten Sonden entspricht, so dass die Sonden zuverlässig in der Buchse fixiert werden können. Die zu der jeweiligen Buchse korrespondierende Ausnehmung in der Wand des Messrohres ist dabei vorzugsweise exakt koaxial zu der Sondenausnehmung positioniert bzw. setzt sich als Sondenausnehmung fort, so dass die Buchse eine exakte Positionierung der Sonde in der Sondenausnehmung gewährleistet.

Die Buchse mit der darin befestigten Sonde ragt im Einbauzustand über die - vorzugsweise partiell abgeflachte - Außenkontur des Messrohrs hinaus, so dass auf die Buchse bzw. die Buchsen eine Basisplatte aufsetzbar ist, wodurch eine Fixierung der Buchsen durch die Basisplatte erfolgt. Die Buchse ragt dazu zumindest teilweise in eine korrespondierende Ausnehmung in der Basisplatte - eine Buchsenausnehmung - hinein, so dass eine formschlüssige Verbindung entsteht. Die Basisplatte selbst wird dabei beispielsweise mit einer Verschraubung an der Wand des Messrohrs befestigt oder durch ein Befestigungselement gehalten und liegt flächig an der - vorzugsweise abgeflachten - Außenfläche des Messrohrs an. Auch hier können durch einen Austausch der Buchsen unterschiedliche Sonden verwendet werden.

Zur Gewährleistung einer thermischen Entkopplung der Sonden von der Wand des Messrohrs ist vorzugsweise vorgesehen, dass der Halter aus einem schlecht wärmeleitenden Material besteht, bevorzugt aus einem Kunststoff besteht, besonders bevorzugt aus Polyetheretherketon (PEEK) besteht. Ein Halter ist aus Kunststoff auf einfache Weise herzustellen und stellt aufgrund seiner schlechten Wärmeleitungseigenschaften eine optimale Isolierung der Sonde von der Wand des Messrohrs dar. Kunststoff hat zudem die vorteilhafte Eigenschaft, dass es schwingungsdämpfend wirkt, so dass der Halter die durch das strömende Medium entstehende Schwingung der Sonde dämpft. Der Halter kann beispielsweise als Spritzgussteil oder als im Wesentlichen rotationssymmetrisches Drehteil gefertigt werden. Als besonders vorteilhafter Kunststoff hat sich dabei Polyetheretherketon erwiesen. Als weitere Materialien für den Halter können aber beispielsweise auch Keramiken verwendet werden.

Für eine explosionsgeschützte Variante der Sensoranordnung hat es sich als vorteilhaft herausgestellt, wenn der Halter aus einem elektrisch leitfähigen Material besteht, insbesondere aus einem leitfähigen Kunststoff besteht. Diese Ausgestaltung hat den Vorteil, dass zum einen keine unterschiedlichen elektrischen Potentiale zwischen dem Halter und der Wand des Messrohrs entstehen können, zum anderen hat die Verwendung von Kunststoff den Vorteil, dass gleichzeitig eine Schwingungsdämpfung erzielt wird. Elektrisch leitfähige Kunststoffe sind beispielsweise Kunststoffe, die mit leitenden Substanzen dotiert sind.

Für eine zuverlässige Befestigung der Sonde an dem Halter ist bevorzugt vorgesehen, dass die Sonde in den Halter eingeklebt ist, insbesondere in die zu der jeweiligen Sonde korrespondierende Buchse eingeklebt ist. Die Sonde ist dadurch unverlierbar mit der Buchse verbunden und zuverlässig in dem Halter gehalten.

Gemäß einer letzten bevorzugten Ausgestaltung der Sensoranordnung ist vorgesehen, dass der Halter geometrisch derart ausgestaltet ist, dass eine Mehrzahl von Haltern übereinander formschlüssig stapelbar ist. Diese Ausgestaltung hat den Vorteil, dass ein einziger Sensortyp und ein einziger Haltertyp für unterschiedliche Messrohre mit verschiedenen Messrohrdurchmessern einsetzbar sind. Bei einem Messrohr mit einem großen Durchmesser wird beispielsweise nur ein einziger Halter benötigt, um den Sensor in dem Strömungskanal des Messrohrs zu positionieren. Bei einem Messrohr mit einem geringeren Durchmesser ist es dahingegen beispielsweise notwendig, dass eine Mehrzahl von Haltern übereinander gestapelt wird, so dass die Halter als Distanzstücke wirken und die Sonde mit einer einheitlichen Länge auch bei geringeren Messrohrdurchmessern verwendbar ist. Die Halter sind dabei derart ausgestaltet, dass die eigentlich für den Eingriff in die korrespondierende Ausnehmung in der Wand des Messrohrs vorgesehene Ausformung an dem Halter beim Stapeln exakt in eine dafür vorgesehene Ausnehmung eines zweiten Halters eingreifen kann, so dass eine beliebige Anzahl an Haltern übereinander stapelbar ist. Vorzugsweise werden jedoch zwei bis maximal drei Halter übereinander gestapelt.

Im Einzelnen gibt es nun eine Vielzahl von Möglichkeiten, die erfindungsgemäße Sensoranordnung auszugestalten und weiterzubilden. Dazu wird verwiesen auf die dem Patentanspruch 1 nachgeordneten Patentansprüche sowie auf die Beschreibung von bevorzugten Ausführungsbeispielen in Verbindung mit der Zeichnung. In der Zeichnung zeigen:
- Fig. 1: ein Ausführungsbeispiel einer Sensoranordnung, die an einem Messrohr befestigt ist,
- Fig. 2: ein Ausführungsbeispiel einer Sensoranordnung mit einem Halter und darin befestigten Sonden,
- Fig. 3: ein weiteres Ausführungsbeispiel einer Sensoranordnung mit zwei Sonden in einem Messrohr,
- Fig. 4: eine Detaildarstellung des Ausführungsbeispiels gemäß Fig. 3,
- Fig. 5a: ein Ausführungsbeispiel einer Sensoranordnung an einem Messrohr mit übereinander gestapelten Haltern und
- Fig. 5b: ein Ausführungsbeispiel einer Sensoranordnung an einem Messrohr mit einem großen Messrohrdurchmesser.

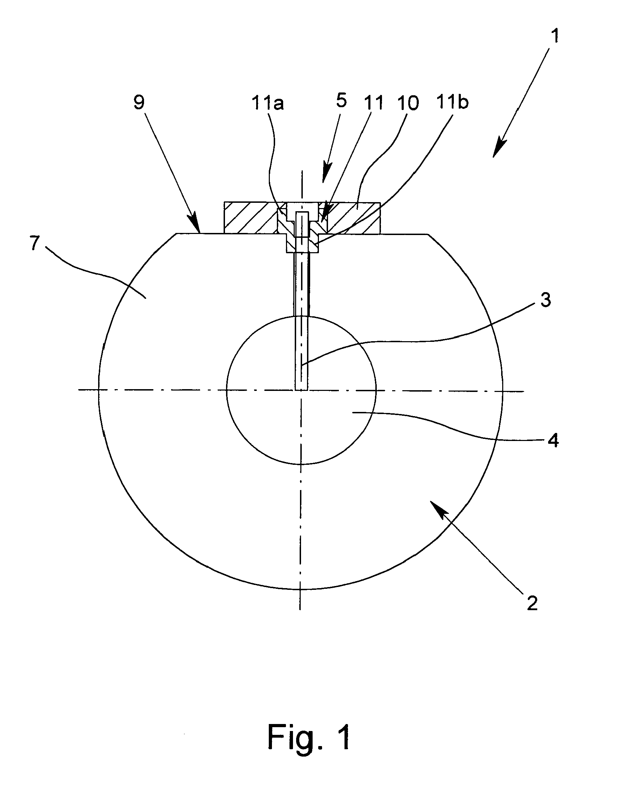

Fig. 1 zeigt eine Sensoranordnung 1 für ein kalorimetrisches Massedurchflussmessgerät, zur Messung des Massedurchflusses in einem Messrohr 2, wobei die Sensoranordnung 1 zwei in Strömungsrichtung hintereinander angeordnete Sonden 3 umfasst. Die Sonden 3 sind im Strömungsquerschnitt 4 des Messrohrs 2 mit einem Halter 5 positioniert. Die Sonden 3 sind derart in dem Halter befestigt, dass sie berührungsfrei mit einem radialen Abstand durch eine Sondenausnehmung 6 durch die Wand 7 des Messrohrs 2 in den Strömungsquerschnitt 4 des Messrohrs 2 geführt sind. Die Spitze der Sonden 3 ist in der Ebene der Mittelachse des Strömungsquerschnitts 4 angeordnet. Die Sonden 3 sind durch den Halter 5 thermisch von der Wand 7 des Messrohrs 2 entkoppelt.

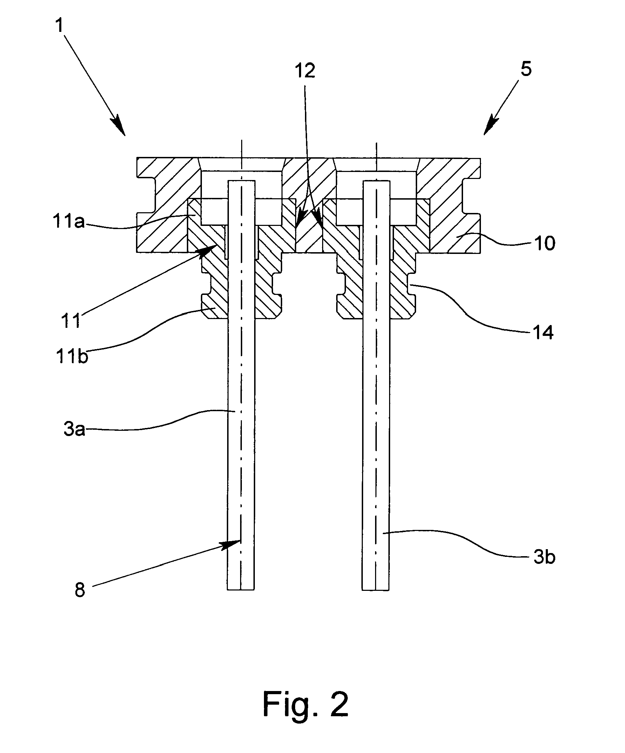

Fig. 2 zeigt ein zweites Ausführungsbeispiel einer Sensoranordnung für ein kalorimetrisches Massedurchflussmessgerät mit einer ersten Sonde 3a und einer zweiten Sonde 3b, wobei die erste Sonde 3a in ihrem Kopfbereich 8 aufheizbar ist, so dass sie einen Wärmestrom an das Medium abgibt. Die zweite Sonde 3b ist in einem gemeinsamen Halter 5 neben der ersten Sonde 3a angeordnet und zur Messung einer Temperatur, insbesondere der Temperatur des strömenden Mediums in einer Rohrleitung, geeignet. Innerhalb der Sonde befindet sich dazu ein Temperaturmesswiderstand.

Eine Sensoranordnung gemäß der Fig. 2 ist in Fig. 1 beispielhaft im Einbauzustand in einem Messrohr 2 dargestellt, wobei das Messrohr 2 in einem Befestigungsbereich eine Abflachung 9 zur Befestigung des Halters 5 aufweist. Eine Befestigung des Halters 5 auf der ebenen Abflachung 9 ist im Gegensatz zur Befestigung eines Halters 5 auf der üblicherweise gewölbten Oberfläche eines Messrohrs 2 sehr einfach. Der in den Fig. 1 und 2 dargestellte Halter 5 ist jeweils mehrteilig ausgestaltet und besteht aus einer Basisplatte 10, wobei in der Basisplatte 10 eine der Anzahl der Sonden 3 entsprechende Anzahl an Buchsen 11 - hier zwei Buchsen 11 - angeordnet ist. Fig. 2 zeigt, dass die Sonden 3 zentral in den rotationssymmetrisch ausgestalteten Buchsen 11 befestigt - hier eingeklebt - sind. Die Buchsen 11 sind formschlüssig in eine korrespondierende Buchsenausnehmung 12 in die Basisplatte 10 eingebracht.

Fig. 1 zeigt, dass der obere Teil 11 a der Buchse 11 in eine korrespondierende Buchsenausnehmung 12 in der Basisplatte 10 und der untere Teil 11b der Buchse 11 in eine korrespondierende Ausnehmung in der Wand 7 des Messrohrs 2 eingebracht ist, so dass die Buchse 11 ein Verbindungsglied zwischen Basisplatte 10 und dem Messrohr 2 darstellt. Die Ausnehmung für den unteren Teil 11b der Buchse 11 in dem Messrohr 2 ist koaxial zur Sondenausnehmung 6 positioniert, so dass sich die Ausnehmung als Sondenausnehmung 6 fortsetzt. Die Buchse 11 gewährleistet somit für eine exakte Positionierung der Sonde 3 in der Sondenausnehmung 6 in der Wand 7 des Messrohrs 2. Die Buchse 11 ist durch die Basisplatte 10 fixiert. Der Halter 5, also die Basisplatte 10 und die Buchsen 11, sind bei den dargestellten Ausführungsbeispielen aus Polyetheretherketon (PEEK) gefertigt. Sowohl die Buchsen 11, als auch die Basisplatte 10 sind bezüglich ihrer Außenkontur rotationssymmetrisch aufgebaut, so dass eine einfache Fertigung möglich ist. Fig. 1 zeigt den Idealfall der Positionierung der Sonde 3 durch den Halter 5, nämlich derart, dass das untere Ende der Sonde 3 exakt in der Mittelebene des Strömungsquerschnitts 4 des Messrohrs 2 angeordnet ist. Durch diese Positionierung der Sonden 3 lässt sich ein optimales Messergebnis erzielen.

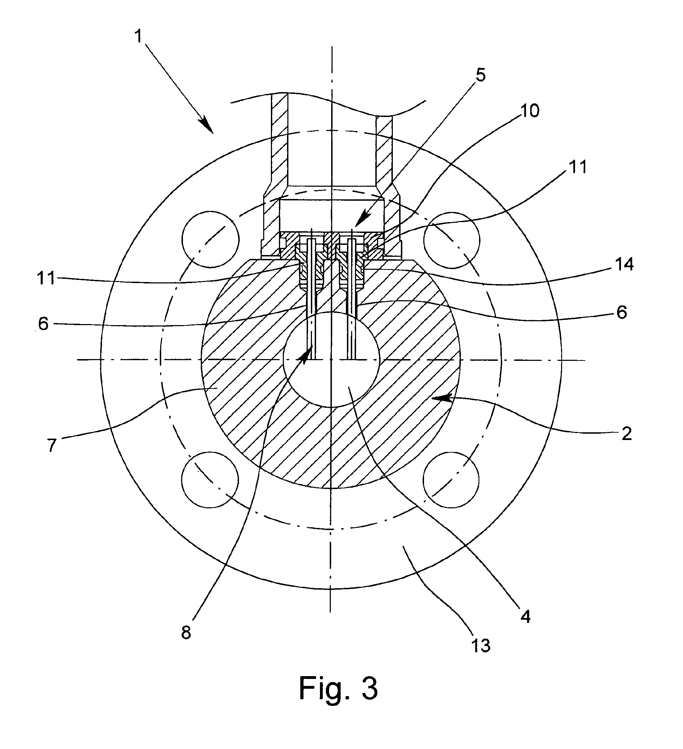

Fig. 3 zeigt ein Ausführungsbeispiel einer Sensoranordnung 1 für ein kalorimetrisches Massedurchflussmessgerät, bei der die Sonden 3 quer zur Strömungsrichtung innerhalb des Strömungsquerschnitts 4 des Messrohrs 2 angeordnet sind. Die erste Sonde 3a ist bei diesem Ausführungsbeispiel in ihrem Kopfbereich 8 heizbar, so dass ein Wärmestrom an das durch den Strömungsquerschnitt 4 des Messrohrs 2 strömende Medium abgegeben werden kann. Die zweite Sonde 3b dient zur Messung einer Referenztemperatur und ist mit einem Temperaturmesswiderstand ausgestattet. Beide Sonden 3 sind nebeneinander durch zwei getrennte Sondenausnehmungen 6 durch die Wand 7 des Messrohrs 2 in den Strömungsquerschnitt 4 eingebracht und werden von einem Halter 5 mit einer gemeinsamen Basisplatte 10 und jeweils einer zu jeder Sonde korrespondierenden Buchse 11 gehalten.

Das Messrohr 2 ist bei diesem Ausführungsbeispiel gemäß Fig. 3 zusätzlich von einem Hüllrohr 13 umgeben. Die Sonden 3 sind bei diesem Ausführungsbeispiel derart in dem Halter 5 gehalten, dass sie zum einen durch die jeweiligen Sondenausnehmungen 6 mit einem radialen Abstand gerührt sind, ohne die Wand 7 des Messrohrs 2 unmittelbar zu berühren, zum anderen durch den Halter 5 thermisch von der Wand 7 des Messrohrs 2 entkoppelt sind, so dass kein oder nur ein sehr geringer Wärmefluss zwischen den Sonden 3 und der Wand 7 des Messrohrs 2 erfolgt. Damit durch die Sondenausnehmungen 6 kein Medium aus dem Messrohr 2 heraustreten kann, sind die Buchsen 11 jeweils mit einem umlaufenden Ringspalt 14 ausgestattet, in den beispielsweise eine O-Ring Dichtung einbringbar ist, so dass eine Dichtung zwischen der jeweiligen Buchse 11 und der Wand 7 des Messrohrs 2 erfolgt. Die Verbindung zwischen der jeweiligen Buchse 11 in der Sonde 3 ist dichtend, da die Sonden 3 in die Buchsen 11 eingeklebt sind.

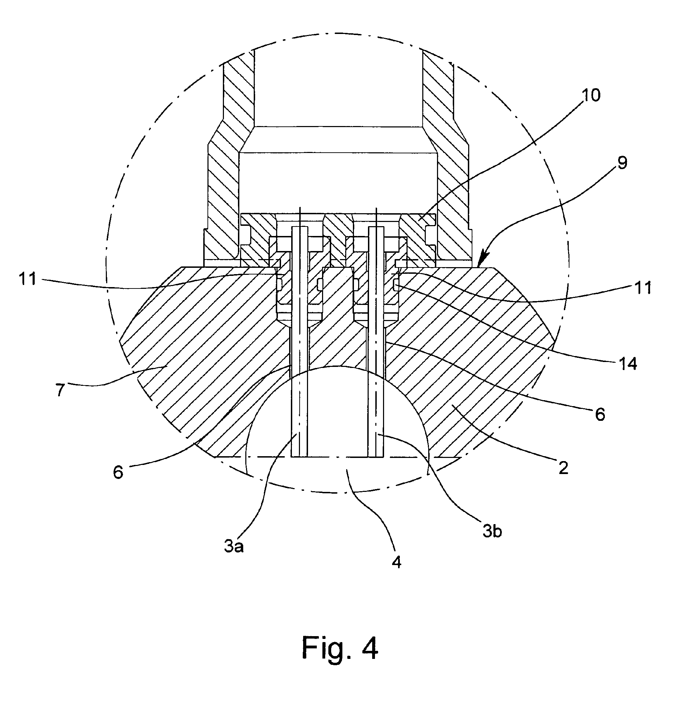

Fig. 4 zeigt eine Vergrößerung eines Ausschnitts des Ausführungsbeispiels gemäß Fig. 3. Die Buchsen 11 sind sowohl in die Basisplatte 10, als auch in die Wand 7 des Messrohrs 2 eingebracht und stellen somit ein Verbindungsglied zwischen der Basisplatte 10 und dem Messrohr 2 dar. Die Buchsen 11 dienen zur exakten Positionierung der Sonden 3 innerhalb der Sondenausnehmungen 6 in der Wand 7 des Messrohrs 2 und des Weiteren zur thermischen Entkopplung der Sonden 3. Die Sonden 3 sind dabei derart in den Sondenausnehmungen 6 positioniert, dass sie mit einem radialen Abstand durch die Sondenausnehmungen 6 in den Strömungsquerschnitt 4 des Messrohrs 2 hineingeführt werden, ohne dass die Sonden 3 die Wand 7 des Messrohrs 2 berühren.

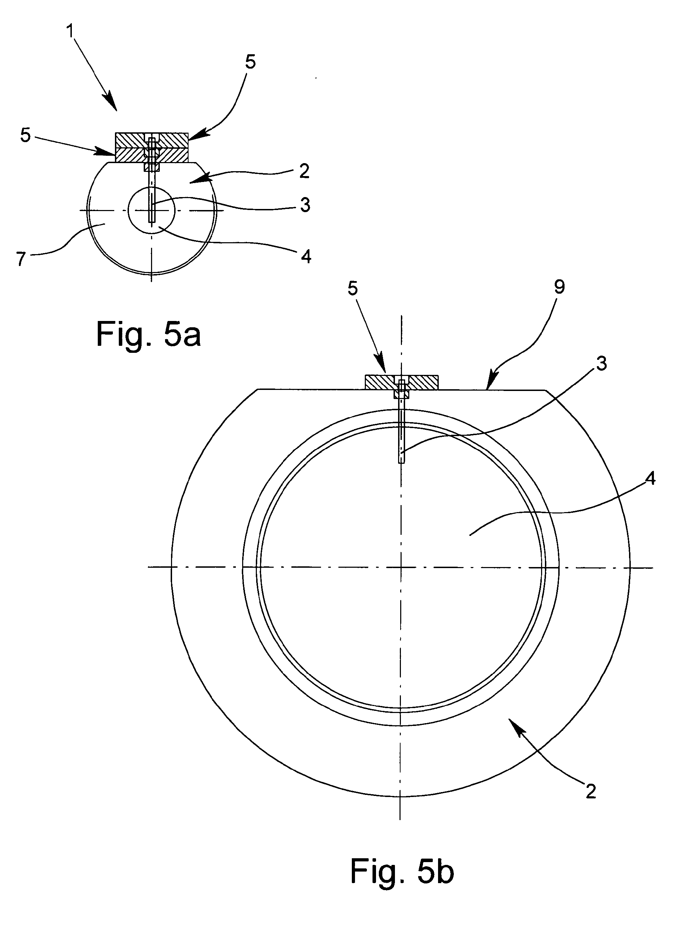

Fig. 5a zeigt ein Ausführungsbeispiel einer Sensoranordnung 1, montiert in einem Messrohr 2 mit einem geringen Durchmesser. Da vorzugsweise für sämtliche Messrohrdurchmesser einheitliche Halter 5 und einheitliche Sonden 3 verwendet werden, ist bei diesem Ausführungsbeispiel zur Positionierung der Sonde 3 im Strömungsquerschnitt 4 des Messrohrs 2 vorgesehen, dass die Sonden 3 von zwei übereinander gestapelten Haltern 5 positioniert sind, nämlich durch den größeren Abstand, der durch die beiden Halter 5 realisiert wird, aus dem Strömungsquerschnitt 4 herausgezogen, so dass durch diese Anpassung der Eindringtiefe eine Sonde 3 verwendet werden kann, die eigentlich zu lang für den Durchmesser des Messrohrs 2 ist. Die Halter 5 sind dafür geometrisch derart ausgestaltet, dass der Halter 5 mit seiner Buchse 11 sowohl in einer Ausnehmung in der Wand 7 des Messrohrs 2 als auch in eine entsprechende Ausnehmung in der Oberseite eines zweiten Halters 5 eingreifen kann, so dass eine problemlose Stapelung einer Mehrzahl von Haltern 5 ermöglicht ist.

Fig. 5b zeigt, im Gegensatz zur Darstellung in Fig. 5a, ein Ausführungsbeispiel einer Sensoranordnung 1, montiert in einem Messrohr 2 mit einem sehr großen Durchmesser, so dass die Sonde 3, die von einem einzigen Halter 5 gehalten wird, nur im oberen Bereich des Strömungsquerschnitts 4 in diesen hineinragt. Die Sonde 3 weist dabei eine identische Größe wie die in Fig. 5a dargestellte Sonde auf, allerdings wird bei diesem Ausführungsbeispiel - bei größerem Messrohrdurchmesser - für die Befestigung der Sonde 3 lediglich ein einziger Halter 5 verwendet, da eine Anpassung der Eindringtiefe der Sonde 3 bei diesem großen Durchmesser des Messrohrs 2 nicht notwendig ist. Das Ausführungsbeispiel in Fig. 5b weist zusätzlich die Besonderheit auf, dass im Gegensatz zu dem Ausführungsbeispiel in Fig. 1, bei dem zwei Sonden 3 hintereinander angeordnet sind, lediglich eine Sonde 3 in dem Halter 5 umfasst ist, so dass zur Auswertung des Massedurchflusses mit dieser Anordnung die Kenntnis einer Referenztemperatur bzw. der Fluidtemperatur notwendig ist.

## Patentansprüche

1. Sensoranordnung (1) für ein kalorimetrisches Massedurchflussmessgerät, zur Messung des Massedurchflusses in einem Messrohr (2), umfassend mindestens eine Sonde (3), wobei die Sonde (3) im Strömungsquerschnitt (4) des Messrohrs (2) positionierbar ist,
**dadurch gekennzeichnet,**
**dass** ein Halter (5) vorgesehen ist, wobei die Sonde (3) derart in dem Halter (5) befestigt ist, dass die Sonde (3) im Einbauzustand im Messrohr (2) im Wesentlichen berührungsfrei mit einem radialen Abstand durch mindestens eine Sondenausnehmung (6) in der Wand (7) des Messrohrs (2) in den Strömungsquerschnitt (3) des Messrohrs (2) geführt ist und
wobei der Halter (5) derart ausgestaltet ist, dass die Sonde (3) von dem Messrohr (2) thermisch entkoppelt ist.

2. Sensoranordnung (1) nach Anspruch 1, **dadurch gekennzeichnet, dass** mindestens zwei Sonden (3) in dem Halter (5) befestigt sind, wobei eine erste Sonde (3a) zumindest in einem Kopfbereich (8) aufheizbar ist und eine zweite Sonde (3b) zur Messung einer Temperatur geeignet ist.

3. Sensoranordnung (1) nach Anspruch 1 oder 2, **dadurch gekennzeichnet, dass** der Halter (5) an der Außenfläche des Messrohrs (2) befestigbar ist, insbesondere das Messrohr (2) in einem Befestigungsbereich zur Befestigung des Halters (5) eine Abflachung (9) aufweist.

4. Sensoranordnung (1) nach einem der Ansprüche 1 bis 3, **dadurch gekennzeichnet, dass** im Einbauszustand zumindest ein Teil des Halters (5) teilweise in die Wand (7) des Messrohrs (2) hineinragt.

5. Sensoranordnung (1) nach einem der Ansprüche 1 bis 4, **dadurch gekennzeichnet, dass** der Halter (5) mehrteilig ausgestaltet ist, nämlich eine Basisplatte (10) und einer der Anzahl der Sonden (3) entsprechenden Anzahl an Buchsen (11) umfasst, insbesondere wobei die Buchsen (11) zumindest teilweise formschlüssig in korrespondierende Buchsenausnehmungen (12) in der Basisplatte (10) einbringbar sind.

6. Sensoranordnung (1) nach Anspruch 4 und 5, **dadurch gekennzeichnet, dass** die Buchsen (11) zumindest teilweise in korrespondierende Ausnehmungen sowohl in der Basisplatte (10) als auch in der Wand (7) des Messrohrs (2) einbringbar sind, so dass die Buchsen (11) ein Verbindungsglied zwischen Basisplatte (10) und der Wand (7) des Messrohrs darstellen.

7. Sensoranordnung (1) nach einem der Ansprüche 1 bis 6, **dadurch gekennzeichnet, dass** der Halter (5) aus einem schlecht wärmeleitenden Material besteht, bevorzugt aus einem Kunststoff besteht, besonders bevorzugt aus Polyetheretherketon (PEEK) besteht.

8. Sensoranordnung (1) nach einem der Ansprüche 1 bis 7, **dadurch gekennzeichnet, dass** der Halter (5) aus einem elektrisch leitfähigen Material besteht, insbesondere aus einem leitfähigen Kunststoff besteht.

9. Sensoranordnung (1) nach einem der Ansprüche 1 bis 8, **dadurch gekennzeichnet, dass** die Sonde (3) in den Halter (5) eingeklebt ist.

10. Sensoranordnung (1) nach einem der Ansprüche 1 bis 9, **dadurch gekennzeichnet, dass** der Halter (5) geometrisch derart ausgestaltet ist, dass eine Mehrzahl von Haltern (5) übereinander formschlüssig stapelbar ist.

11. Halter (5) für eine Sensoranordnung (1) eines kalorimetrischen Massedurchflussmessgeräts, **gekennzeichnet durch** die Merkmale wenigstens eines Kennzeichnungsteils wenigstens eines Anspruchs der Ansprüche 2 bis 10.
